# EUROPEAN PATENT APPLICATION

(11) **EP 2 523 030 A1**
(43) Date of publication of application: **14.11.2012**
(21) Application number: 12167526.8
(22) Date of filing: 10.05.2012
(51) Int. Cl.: G02B 6/42

(54) **Optical module**

(30) Priority: 13.05.2011 JP 2011108655
(71) Applicant: NTT ELECTRONICS CORPORATION, Kanagawa 221-0031 (JP); NIPPON TELEGRAPH AND TELEPHONE CORPORATION, Tokyo 100-8116 (JP)
(72) Inventor: Nishizawa, Toshiki, Yokohama-shi, Kanagawa 221-0031 (JP); Mitsuhashi, Yuji, Yokohama-shi, Kanagawa 221-0031 (JP); Kasahara, Ryoichi, Tokyo 180-8585 (JP); Ogawa, Ikuo, Tokyo 180-8585 (JP)
(74) Representative: Michalski Hüttermann & Partner

(57) **Abstract**

PROBLEM

The present invention has an object to provide an optical module having a structure to prevent occurrence of optical axis deviation at the time of YAG laser welding.

SOLUTION

An optical module of the present invention includes a flat-plate-shaped base 11 having a predetermined thickness, an optical semiconductor package 12 which is mounted on a plane of the flat-plate-shaped base 11 to air-tightly seal an active optical element, a waveguide optical element 13 which wave-guides light from an optical fiber 16 or to an optical fiber 16 and which is mounted on the plane of the flat-plate-shaped base 11, an optical lens 14 which connects the optical semiconductor package 12 and the waveguide optical element 13 and which is mounted on the plane of the flat-plate-shaped base 11, and a frame-equipped lid 15 which covers the optical semiconductor package 12, the waveguide optical element 13, and the optical lens 14 and which is fixed onto the plane of the flat-plate-shaped base 11.

## Description

### TECHNICAL FIELD

The present invention relates to an optical module which transmits or receives an optical signal.

### BACKGROUND

Conventionally, there has been proposed an optical module which transmits or receives an optical signal (for example, see Patent Document 1). An optical module of Patent Document 1 accommodates an optical element, a base (hereinafter, described as a carrier) on which the optical element is mounted, a lens, and a lens fixing fitting. Module implementation is performed such that the lens and the lens fixing fitting are subjected to spot welding with YAG laser after optically aligned and are fixed on the carrier and that the carrier is installed in a module case.

### PRIOR ART DOCUMENT

### PATENT DOCUMENT

Patent Document 1: Japanese Patent Application Laid-Open No. 2000-277843

### DISCLOSURE OF THE INVENTION

### PROBLEMS TO BE SOLVED BY THE INVENTION

In the optical module of Patent Document 1, the carrier is installed in the module case after implemented outside the module case. Therefore, there has been a problem that implementation takes time. Further, when a subassembly which is optically aligned outside the module case is installed in the module case, the optical axis position is shifted based on a height tolerance of the subassembly. Therefore, it has been difficult to perform optical coupling with a waveguide such as a fiber.

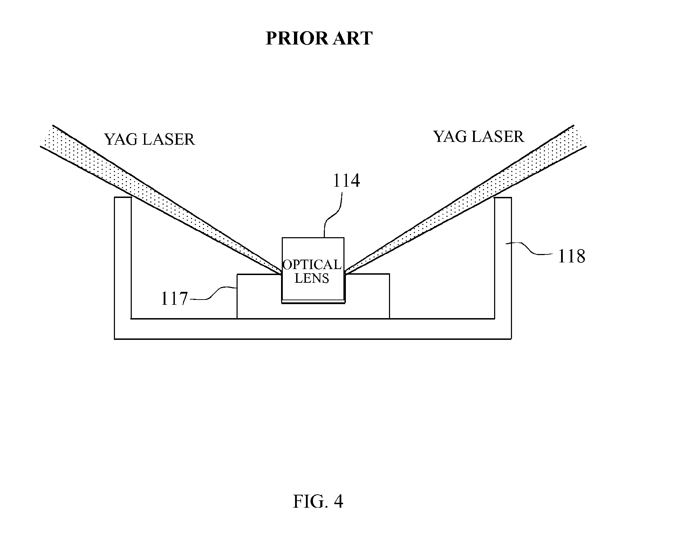

As a method to solve the above problems, it may be considered to perform optical alignment in a package and to perform spot welding with YAG laser on the lens and the lens fixing fitting. However, owing to existence of a frame 118, an irradiation angle of laser light cannot be close to horizontal and laser light is to be irradiated with from an upper side as illustrated in FIG. 4. Then, an optical lens 114 may be subducted in a lens retention holder 117. As a result, optical axis deviation occurs and a yield decreases. In particular, the yield significantly decreases when the optical lens 114 performs inputting and outputting of light at a plurality of ports.

Accordingly, it is aimed to provide an optical module having a structure to prevent occurrence of optical axis deviation at the time of YAG laser welding.

### MEANS FOR SOLVING PROBLEMS

To solve the above object, in an optical module of the present invention, an optical lens, a waveguide optical element, and an optical semiconductor package in which an active optical element such as a light-emitting element and a light-receiving element is air-tightly sealed are mounted on a flat-plate-shaped base which has a predetermined thickness required for ensuring package stiffness.

In particular, an optical module of the present invention includes a flat-plate-shaped base having a predetermined thickness; an optical semiconductor package which is mounted on a plane of the flat-plate-shaped base and in which an active optical element is air-tightly sealed; a waveguide optical element which wave-guides light from an optical fiber or to an optical fiber and which is mounted on the plane of the flat-plate-shaped base; an optical lens which connects the active optical element and the waveguide optical element and which is mounted on the plane of the flat-plate-shaped base; and a frame-equipped lid which covers the optical semiconductor package, the waveguide optical element, and the optical lens and which is fixed onto the plane of the flat-plate-shaped base.

Since the optical module of the present invention includes the flat-plate-shaped base, the optical semiconductor package, the waveguide optical element, the optical lens and the frame-equipped lid, it is possible to configure the optical module to transmit or receive an optical signal. Here, since the optical module of the present invention adopts the flat-plate-shaped base having the predetermined thickness as the base on which the optical semiconductor package, the optical semiconductor package,_the waveguide optical element and the optical lens are mounted, it is possible to set an irradiation angle of laser light to be close to horizontal when the optical semiconductor package, the waveguide optical element and the optical lens are fixed to the base while ensuring package stiffness without a frame. Since the irradiation angle of laser light can be set to be close to horizontal when the waveguide optical element and the optical lens are fixed to the base, it is possible to prevent occurrence of optical axis deviation when the optical semiconductor package, the waveguide optical element and the optical lens are fixed to the base. According to the optical module of the present invention, it is possible to provide an optical module having a structure which prevents occurrence of optical axis deviation at the time of YAG laser welding.

In the optical module of the present invention, the flat-plate-shaped base may be made of kovar, and a chassis of the optical semiconductor package may be made of ceramic.
Since kovar and ceramic have similar linear expansivity, deformation is suppressed even when temperature of the optical semiconductor package or the waveguide optical element is varied. Accordingly, it is possible to prevent optical axis deviation due to temperature variation.

In the optical module of the present invention, the predetermined thickness of the flat-plate-shaped base may be not less than 2.25 mm and not more than 5 mm.
Owing to that the thickness of the flat-plate-shaped base is 2.25 mm or more, deformation of the flat-plate-shaped base can be prevented. Further, owing to that the thickness of the flat-plate-shaped base is 5mm or less, the thickness of the optical module can be set to be 9mm or less.

In the optical module of the present invention, the flat-plate-shaped base may be provided with a flange at an outer edge, and a thickness of the flange may be not less than 0.5 mm and not more than 5 mm.
Owing to that the thickness of the flange is 0.5 mm or more, the optical module can be fixed with sufficient strength while preventing deformation of the flat-plate-shaped base. Further, owing to that the thickness of the flange is 5 mm or less, the thickness of the optical module can be set to be 9 mm or less.

In the optical module of the present invention, the plane of the flat-plate-shaped base and an outer wall face of the frame-equipped lid may be subjected to Ni plating.
Since the flat-plate-shaped base is subjected to Ni plating, oxidation can be prevented. Further, since a reflection rate of Ni plating is low, laser welding can be performed so that the optical semiconductor package, the waveguide optical element and the optical lens can be fixed to the flat-plate-shaped base. Further, since the outer wall face of the frame-equipped lid is subjected to Ni plating, the frame-equipped lid can be fixed to the flat-plate-shaped base by laser welding.

In the optical module of the present invention, it is preferable that the flat-plate-shaped base has a larger area than that of the optical semiconductor package.
The present invention provides a sufficient installation space for the optical lens and the waveguide optical element, optical axis adjustment of the optical lens and the waveguide optical element is performed easily and laser welding is performed easily. Further, since it is possible to arrange a plurality of optical lenses or to arrange a plurality of waveguide optical elements, variations of optical design to be mounted to an optical module can be increased.

Here, the abovementioned inventions can be combined to the extent possible.

### EFFECTS OF THE INVENTION

According to the present invention, it is possible to provide an optical module having a structure to prevent occurrence of optical axis deviation at the time of YAG laser welding.

### BRIEF DESCRIPTION OF THE DRAWINGS

FIG. 1 is a top view of an optical module according to the present embodiment.
FIG. 2 is a sectional view at A-A' of the optical module according to the present embodiment.
FIG. 3 illustrates an example of an irradiation angle of laser light in the optical module according to the present embodiment.
FIG. 4 illustrates an example of an irradiation angle of laser light in a conventional optical module.

### MODE FOR CARRYING OUT THE INVENTION

Embodiments of the present invention will be described with reference to the attached drawings. The embodiments described below are examples to embody the present invention. The present invention is not limited to the following embodiments. Here, in the specification and drawings, structural components having the same numeral denote the same entity.

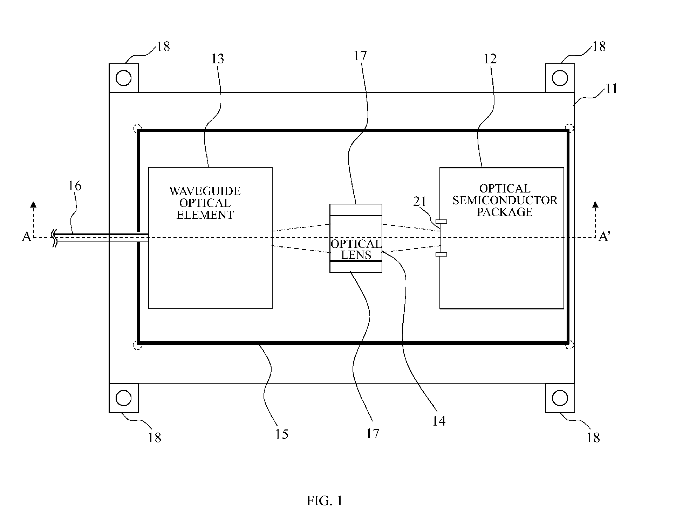

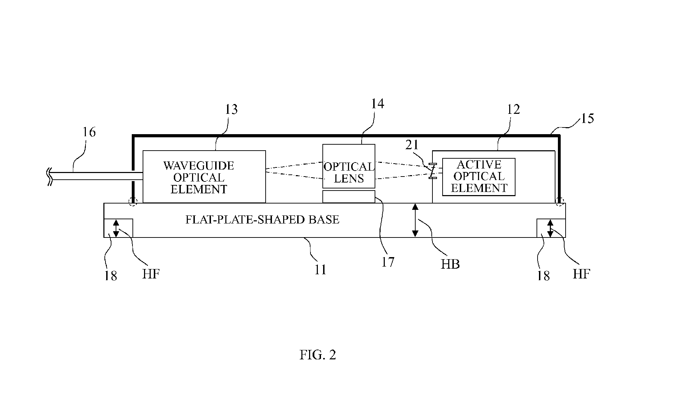

FIGS. 1 and 2 illustrate an example of an optical module according to the present embodiment. FIG. 1 is a top view of the optical module according to the present embodiment and FIG. 2 is a sectional view at A-A'. The optical module according to the present embodiment includes a flat-plate-shaped base 11, an optical semiconductor package 12, a waveguide optical element 13, an optical lens 14, a frame-equipped lid 15, a lens retention holder 17, and a flange 18.

The optical module according to the present embodiment can configure an integrated receiving front end (FE) module which supports optical phase modulation, that is, a quadrature phase shift keying (QPSK) transmission system or a dual-polarization quadrature phase shift keying (DP-QPSK) transmission system, as being associated with further communication traffic increase. A planar lightwave circuit (PLC) receiving optical circuit to be used for the transmission systems, which is called a delayed interferometer (DLI) or a dual polarization optical hybrid (DPOH), converts difference in phase state of optical signals into difference in optical intensity. The waveguide optical element 13 functions as the PLC receiving optical circuit. Then, a photo diode (PD) in the optical semiconductor package 12 capable of detecting only optical intensity difference receives an optical signal which is converted into optical intensity difference by the PLC receiving optical circuit. A transimpedance amplifier (TIA) in the optical semiconductor package 12 amplifies an electric signal demodulated by the PD by current/voltage conversion and outputs it as a high-frequency electric signal. In this manner, the optical semiconductor package 12 may accommodate a circuit such as a TIA in addition to active optical elements such as a laser diode (LD) and a PD. In the following, details of the optical module according to the present embodiment will be described.

The waveguide optical element 13 and optical components such as the optical lens 14 are mounted on the flat-plate-shaped base 11 which has a sufficiently larger area than that of the optical semiconductor package 12. To enable spot welding such as YAG laser of the optical components such as the optical lens 14, the flat-plate-shaped base 11 is not Au-plated but is Ni-plated. Further, the flat-plate-shaped base 11 not having a frame at a side face has a predetermined thickness to ensure package stiffness. Owing to ensuring package stiffness, the flat-plate-shaped base 11 is prevented from being deformed even if jointly fixed to a printed board when assembling the optical module to an optical receiving apparatus, so that excellent optical characteristics can be obtained.

Here, it is preferable that the flat-plate-shaped base 11 is made of kovar. In this case, it is preferable that the predetermined thickness HB is not less than 2.25 mm and not more than 5 mm. Owing to that the thickness HB of the flat-plate-shaped base 11 is 2.25 mm or more, the flat-plate-shaped base 11 is prevented from being deformed even if jointly fixed to a printed board. Further, since the thickness HB of the flat-plate-shaped base 11 is 5 mm or less, the thickness of the optical module can be set to be 9 mm or less. Accordingly, it is possible to be compliant to standards defined by the Optical Internetworking Forum (OIF).

Further, when the flat-plate-shaped base 11 is made of kovar, it is preferable that a chassis of the optical semiconductor package 12 is made of ceramic. This is because difference in linear expansivity is small between kovar and ceramic.

An active optical element such as a light-emitting element and a light-receiving element is air-tightly sealed in the optical semiconductor package 12 and a transmission window 21 for transmitting an optical signal is arranged at the chassis. The active optical element is fixed to an active optical element accommodation portion of the optical semiconductor package 12 with solder or resin. To support an optical phase modulation system, a plurality of elements is arrayed as the active optical elements. The number of arrays is varied in accordance with a transmission system. It may be two arrays, four arrays, or eight arrays. Alternatively, it is also possible to arrange a plurality of elements which are not arrayed. The arrays may be arranged as evenly spaced or unevenly spaced.

A metal for sealing is arranged at an upper part of the active optical element accommodation portion to be capable of air-tightly sealing the active optical elements by seam welding, resistance welding, laser welding or the like using a metal-made lid. For example, N₂ gas is used as replacement gas.

To prevent reflection of an optical signal, the transmission window 21 is subjected to anti-reflection (AR) coating, and further, is installed as angled against the optical signal. It is preferable that material of the transmission window 21 is sapphire or borosilicate glass having small difference in linear expansivity from ceramic which is used for the chassis.

The optical lens 14 connects the optical semiconductor package 12 and the waveguide optical element 13. The active optical element in the optical semiconductor package 12 and an optical signal of the waveguide optical element 13 are optically coupled by the optical lens 14. The optical lens 14 may adopt a finite system of one piece or a confocal system of two pieces. The optical lens 14 may be one lens having a predetermined effective diameter or a lens array.

The waveguide optical element 13 wave-guides light to an optical fiber 16 or light from the optical fiber 16. The waveguide optical element 13 may be configured as a planar lightwave circuit (PLC) or as an optical fiber array. In a case that a light-emitting element is used as the active optical element and optical modulator is used as the waveguide optical element 13, an integrated transmitting module can be configured as an optical module. In a case that a light-receiving element is used as the active optical element and an optical demodulator is used as the waveguide optical element 13, an integrated receiving module can be configured as an optical module.

The waveguide optical element 13 includes one or plural input waveguides. In addition, the waveguide optical element 13 may include one or plural output waveguides. The number of arrays is the same as the number of arrays of the optical semiconductor package 12. Array intervals may be same as or different from the array intervals of the optical semiconductor package 12.

In a case that the waveguide optical element 13 is a PLC or an optical fiber array, since various resins are used, outgas from the resins can influence the active optical element. However, in the optical module according to the present embodiment, since only the optical semiconductor package 12 is separately sealed, there is no influence of outgas from the resins to the active optical element. Accordingly, the active optical element can perform continuously stable operation.

The frame-equipped lid 15 has a bathtub shape to cover the optical semiconductor package 12, the waveguide optical element 13, and the optical lens 14. The frame-equipped lid 15 may be made of metal or resin material. The frame-equipped lid 15 is subjected to Ni plating at an outer wall face to be capable of being subjected to spot welding such as YAG laser with the flat-plate-shaped base 11.

A flange 18 for jointly-fixing to a printed board may be arranged at an outer edge of the flat-plate-shaped base 11. When the flange 18 is made of kovar, it is preferable that the thickness HF of the flange 18 is not less than 0.5 mm and not more than 5 mm. Owing to that the thickness HF of the flange 18 is 0.5 mm or more, the optical module can be fixed with sufficient strength without causing deformation of the flat-plate-shaped base 11 even if jointly fixed to a printed board. Further, since the thickness HF of the flange 18 is 5 mm or less, the thickness of the optical module can be set to be 9 mm or less. Accordingly, it is possible to be compliant to standards defined by the OIF.

The optical semiconductor package 12 and the waveguide optical element 13 are fixed to predetermined positions with solder, resin, laser or the like on the flat-plate-shaped base 11. The optical lens 14 is held by the lens retention holder 17 and is fixed to the flat-plate-shaped base 11 with spot welding such as YAG laser. In a fixing procedure, first, the lens retention holder 17 and the flat-plate-shaped base 11 are fixed, then they are fixed on a direction perpendicular to an optical signal. Next, the optical lens 14 and the lens retention holder 17 are fixed by spot welding such as YAG laser. Conventionally, there has been occurrence of deviation at optical coupling owing to an irradiation angle of laser light.

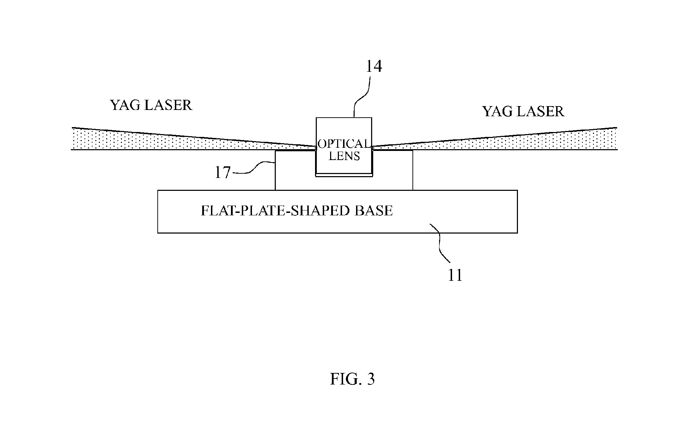

FIG. 3 illustrates an example of an irradiation angle of laser light in the optical module according to the present embodiment. Since the flat-plate-shaped base 11 without a frame is arranged in the optical module according to the present embodiment, the irradiation angle of laser light can be close to horizontal, as illustrated in FIG. 3. As a result, the optical lens 14 is not subducted at the time of fixing the optical lens 14 and the lens retention holder 17 and occurrence of optical axis deviation is prevented. Further, due to arrayed optical coupling, preventing occurrence of optical axis deviation provides major improvement of a yield.

After the optical installation is completed, the frame-equipped lid 15 is fixed onto a plane of the flat-plate-shaped base 11. Thus, the optical module according to the present embodiment has a double cover structure in which the optical semiconductor package 12 is further covered with the frame-equipped lid 15. The frame-equipped lid 15 is fixed to the flat-plate-shaped base 11 by spot welding such as YAG welding, resin fixing, solder fixing, or the like. Owing to that the frame-equipped lid 15 is fixed, package stiffness can be ensured.

As described above, the optical module according to the present embodiment can obtain excellent optical coupling characteristics while stably performing difficult arrayed optical coupling.

### INDUSTRIAL APPLICABILITY

The present invention can be applied to information communication industry.

### DESCRIPTION OF REFERENCE SIGNS

- 11: Flat-plate-shaped base
- 12: Optical semiconductor package
- 13: Waveguide optical element
- 14, 114: Optical lens
- 15: Frame-equipped lid
- 16: Optical fiber
- 17, 117: Lens retention holder
- 18: Flange
- 21: Transmission window
- 118: Frame

## Claims

1. An optical module, comprising:
a flat-plate-shaped base having a predetermined thickness;
an optical semiconductor package which is mounted on a plane of the flat-plate-shaped base and in which an active optical element is air-tightly sealed;
a waveguide optical element which wave-guides light from an optical fiber or to an optical fiber and which is mounted on the plane of the flat-plate-shaped base;
an optical lens which connects the active optical element and the waveguide optical element and which is mounted on the plane of the flat-plate-shaped base; and
a frame-equipped lid which covers the optical semiconductor package, the waveguide optical element, and the optical lens and which is fixed onto the plane of the flat-plate-shaped base.

2. The optical module according to claim 1,
wherein the flat-plate-shaped base is made of kovar; and
a chassis of the optical semiconductor package is made of ceramic.

3. The optical module according to claim 2,
wherein the predetermined thickness of the flat-plate-shaped base is not less than 2.25 mm and not more than 5 mm.

4. The optical module according to any one of claims 1 to 3,
wherein the flat-plate-shaped base is provided with a flange at an outer edge; and
a thickness of the flange is not less than 0.5 mm and not more than 5 mm.

5. The optical module according to any one of claims 1 to 4,
wherein the plane of the flat-plate-shaped base and an outer wall face of the frame-equipped lid are subjected to Ni plating.

6. The optical module according to any one of claims 1 to 5,
wherein the flat-plate-shaped base has a larger area than that of the optical semiconductor package.
